# EUROPÄISCHE PATENTSCHRIFT

(11) **EP 3 382 348 B1**
(45) Veröffentlichungstag und Bekanntmachung des Hinweises auf die Patenterteilung: **29.04.2020**
(21) Anmeldenummer: 17205894.3
(22) Anmeldetag: 07.12.2017
(51) Int. Cl.: G01D 5/245, G01D 1/18, G01D 5/244, G01D 5/347, G01D 18/00

(54) **POSITIONSMESSEINRICHTUNG UND VERFAHREN ZUM BETREIBEN EINER POSITIONSMESSEINRICHTUNG**
POSITION MEASURING DEVICE AND METHOD FOR OPERATING SAME
DISPOSITIF DE MESURE DE POSITION ET PROCÉDÉ DE FONCTIONNEMENT D'UN DISPOSITIF DE MESURE DE POSITION

(30) Priorität: 29.03.2017 DE 102017205267
(43) Veröffentlichungstag der Anmeldung: 03.10.2018
(73) Patentinhaber: Dr. Johannes Heidenhain GmbH, 83301 Traunreut (DE)
(72) Erfinder: MAYER, Elmar, 83365 Nußdorf (DE); SPINDLER, Peter, 83349 Palling (DE)

(56) Entgegenhaltungen:
- EP-A1- 2 017 678
- EP-A1- 2 458 342
- EP-A1- 3 321 636
- DE-A1-102006 012 074

## Beschreibung

### GEBIET DER TECHNIK

Die vorliegende Erfindung betrifft eine Positionsmesseinrichtung nach dem Oberbegriff von Anspruch 1, sowie ein Verfahren zum Betreiben einer Positionsmesseinrichtung nach Anspruch 7. Sie ermöglicht inkrementalen Positionsmesseinrichtungen die Übertragung von Statusmeldungen an eine Folgeelektronik.

### STAND DER TECHNIK

Inkrementale Positionsmesseinrichtungen werden in der Automatisierungstechnik und insbesondere bei Werkzeugmaschinen dazu eingesetzt, Positionsänderungen von beweglichen Teilen zu messen. So messen inkrementale Drehgeber rotatorische Bewegungen, beispielsweise von sich drehenden Wellen. Inkrementale Längenmessgeräte dagegen messen lineare Verschiebungen zueinander beweglich angeordneter Maschinenteile.

In bekannten inkrementalen Positionsmesseinrichtungen wird eine Teilungsspur, die aus regelmäßig angeordneten Codeelementen besteht, von einer Detektoreinheit abgetastet. Dabei können verschiedenste physikalische Abtastprinzipien zum Einsatz kommen, beispielsweise optische, magnetische, induktive oder kapazitive. Die aus der Abtastung resultierenden Detektorsignale sind bei gleichförmiger Bewegung (konstante Geschwindigkeit, bzw. konstante Drehzahl) bevorzugt weitgehend sinusförmig, die Positionsinformation kann beispielsweise durch Zählen der zurückgelegten Signalperioden oder, wenn eine erhöhte Auflösung gefordert ist, zusätzlich durch Unterteilung der Signalperioden in eine Anzahl von Winkelsegmenten (Interpolation) gewonnen werden. Eine Richtungsinformation kann erhalten werden, wenn bei der Abtastung zwei Detektorsignale erzeugt werden, die eine Phasenverschiebung, z.B. 90°, zueinander aufweisen. Um einen absoluten Bezugspunkt für die prinzipbedingt relative Positionsmessung inkrementaler Positionsmesseinrichtungen zu schaffen, wird an wenigstens einer Absolutposition ein Referenzimpuls erzeugt. Hierfür kann auf einer separaten Teilungsspur eine geeignete Teilungsstruktur angeordnet sein, die ebenfalls von der Detektoreinheit abgetastet wird.

Die von der Detektoreinheit gewonnenen Detektorsignale werden in einer Signalverarbeitungseinheit verarbeitet und entsprechend einer Spezifikation einer Ausgangsschnittstelle angepasst. Eine bekannte Schnittstelle für inkrementale Positionsmesseinrichtungen erfordert beispielsweise für die Inkrementalsignale einen Spitze-Spitze-Wert von 1V.

Neben solchen analogen Schnittstellen gibt es auch welche, die digitale Inkrementalsignale ausgeben. In diesem Fall werden in der Signalverarbeitungseinheit aus den analogen Detektorsignalen digitale, also rechteckförmige Inkrementalsignale erzeugt. Auch hier gilt, dass für eine bewegungsrichtungsabhängige Positionsmessung zwei zueinander phasenverschobene digitale Inkrementalsignale erforderlich sind.

Der Referenzimpuls wird ebenfalls, je nach Schnittstelle, analog oder digital ausgegeben.

Die Übertragung der (analogen oder digitalen) Inkrementalsignale, sowie des Referenzimpulses zu einer Folgeelektronik erfolgt über hochwertige, meist geschirmte, mehradrige Kabel. Sie kann sowohl massebezogen, als auch differenziell erfolgen. Da häufig recht lange Wegstrecken zwischen der Folgeelektronik und den Positionsmesseinrichtungen zurückzulegen sind, stellen die Kabel einen nicht zu unterschätzenden Kostenfaktor bei der Projektierung einer Anlage dar. Da die Anzahl der benötigten Adern im Kabel wesentlich auch den Preis bestimmen, ist es ein ständiges Bestreben, die Anzahl der Adern im Kabel minimal zu halten.

Diametral zu diesem Bestreben ist die Anforderung, neben der Positionsinformation auch noch weitere Informationen in der Positionsmesseinrichtung zu generieren, beispielsweise eine Statusmeldung. Um diese aber zur Folgeelektronik übertragen zu können, sind üblicherweise zusätzliche Adern im Kabel notwendig.

Die DE 10 2006 012 074 A1 beschreibt eine Positionsmesseinrichtung, bei der der Zustand einer Überwachungseinrichtung durch Veränderung der Signalamplituden der analogen Positionssignale signalisiert wird. Da sich die Amplitude der Positionssignale aber unmittelbar auf die Positionsauswertung in einer Folgeelektronik auswirkt, kann dies von der Folgeelektronik als Ausfall der Positionsmesseinrichtung interpretiert werden und kann damit zu einem Stillstand der Anlage, in der die Positionsmesseinrichtung betrieben wird, führen.

Die EP 3 321 636 A1, die erst nach dem Prioritätstag der vorliegenden Anmeldung veröffentlicht wurde, offenbart eine Positionsmesseinrichtung, bei der Statusmeldungen durch Hinzufügen einer Störgröße zu einem Positionssignal an eine Folgeelektronik übertragen werden.

Die EP 2 017 678 A1 beschreibt eine Positionsmesseinrichtung, bei der Warnsignale auf den Leitungen übertragen werden, auf denen auch die Referenzimpulse übertragen werden. Warnsignale werden dabei bei Zustandskombinationen der zugeordneten Signalperioden der inkrementellen Positionssignale übertragen, zu denen keine Referenzimpulse übertragen werden.

Die EP 2 458 342 offenbart eine Positionsmesseinrichtung, bei der die Signalisierung eines Fehlerzustands durch Öffnen oder Kurzschließen der Signalleitungen zur Ausgabe der inkrementellen Positionssignale erfolgt.

### ZUSAMMENFASSUNG DER ERFINDUNG

Es ist eine Aufgabe der vorliegenden Erfindung, eine Positionsmesseinrichtung anzugeben, mit der auf einfache Weise Statusmeldungen zu einer Folgeelektronik ausgebbar sind.

Diese Aufgabe wird gelöst durch eine Positionsmesseinrichtung nach Anspruch 1.

Eine erfindungsgemäße Positionsmesseinrichtung umfasst
- einen Teilungsträger, auf dem eine Messteilung angeordnet ist,
- eine Abtasteinheit zur Erzeugung von positionsabhängigen Abtastsignalen durch Abtastung der Messteilung,
- eine Signalverarbeitungseinheit zur Verarbeitung der Abtastsignale zu inkrementalen Positionssignalen,
- eine Referenzsignal-Ausgabeeinheit zur Ausgabe von Referenzimpulsen über ein Referenzimpuls-Signal,
- eine Ausgabeschnittstelle zur Ausgabe der inkrementalen Positionssignale und des Referenzimpuls-Signals an eine Folgeelektronik
und ist dadurch gekennzeichnet, dass
- eine Überwachungseinheit vorgesehen ist, der wenigstens ein zu überwachendes Signal zugeführt ist und von der, basierend auf der Überwachung des zu überwachenden Signals, wenigstens eine Statusmeldung an die Referenzsignal-Ausgabeeinheit ausgebbar ist und
- von der Referenzsignal-Ausgabeeinheit die wenigstens eine Statusmeldung durch Variation der Absolutposition und/oder der Anzahl von Referenzimpulsen ausgebbar ist.

Weiter ist es Aufgabe der vorliegenden Erfindung, ein Verfahren anzugeben, mit der auf einfache Weise Statusmeldungen zu einer Folgeelektronik ausgebbar sind.

Diese Aufgabe wird gelöst durch ein Verfahren zum Ausgeben einer Statusmeldung nach Anspruch 7.

Vorgeschlagen wird ein Verfahren zum Ausgeben einer Statusmeldung mit einer Positionsmesseinrichtung, umfassend
- einen Teilungsträger, auf dem eine Messteilung angeordnet ist,
- eine Abtasteinheit zur Erzeugung von positionsabhängigen Abtastsignalen durch Abtastung der Messteilung,
- eine Signalverarbeitungseinheit zur Verarbeitung der Abtastsignale zu inkrementalen Positionssignalen,
- eine Referenzsignal-Ausgabeeinheit zur Ausgabe von Referenzimpulsen über ein Referenzimpuls-Signal und
- eine Ausgabeschnittstelle zur Ausgabe der inkrementalen Positionssignale und des Referenzimpuls-Signals an eine Folgeelektronik.
Das Verfahren ist dadurch gekennzeichnet, dass
- eine Überwachungseinheit vorgesehen ist, der wenigstens ein zu überwachendes Signal zugeführt ist und von der, basierend auf der Überwachung des zu überwachenden Signals, wenigstens eine Statusmeldung an die Referenzsignal-Ausgabeeinheit ausgegeben wird und
- von der Referenzsignal-Ausgabeeinheit die wenigstens eine Statusmeldung durch Variation der Absolutposition und/oder der Anzahl von Referenzimpulsen ausgegeben wird

Weitere Vorteile ergeben sich aus den von Anspruch 1, bzw. Anspruch 7 abhängigen Ansprüchen und aus der nachfolgenden Beschreibung vorteilhafter Ausführungsbeispiele.

### KURZE BESCHREIBUNG DER ZEICHNUNGEN

Es zeigt
- Figur 1: ein Blockdiagramm einer erfindungsgemäßen Positionsmesseinrichtung,
- Figur 2: ein Signaldiagramm von digitalen Positionssignalen,
- Figur 3: ein Signaldiagramm von analogen Positionssignalen,
- Figur 4a: ein vereinfachtes Signaldiagramm zur Ausgabe von Referenzsignalen im Stand der Technik,
- Figur 4b: ein vereinfachtes Signaldiagramm einer ersten Ausführungsform zur Ausgabe einer Statusmeldung,
- Figur 4c: ein vereinfachtes Signaldiagramm einer zweiten Ausführungsform zur Ausgabe einer Statusmeldung,
- Figur 4d: ein vereinfachtes Signaldiagramm einer dritten Ausführungsform zur Ausgabe einer Statusmeldung und
- Figur 4e: ein vereinfachtes Signaldiagramm einer vierten Ausführungsform zur Ausgabe einer Statusmeldung.

### BESCHREIBUNG DER AUSFÜHRUNGSFORMEN

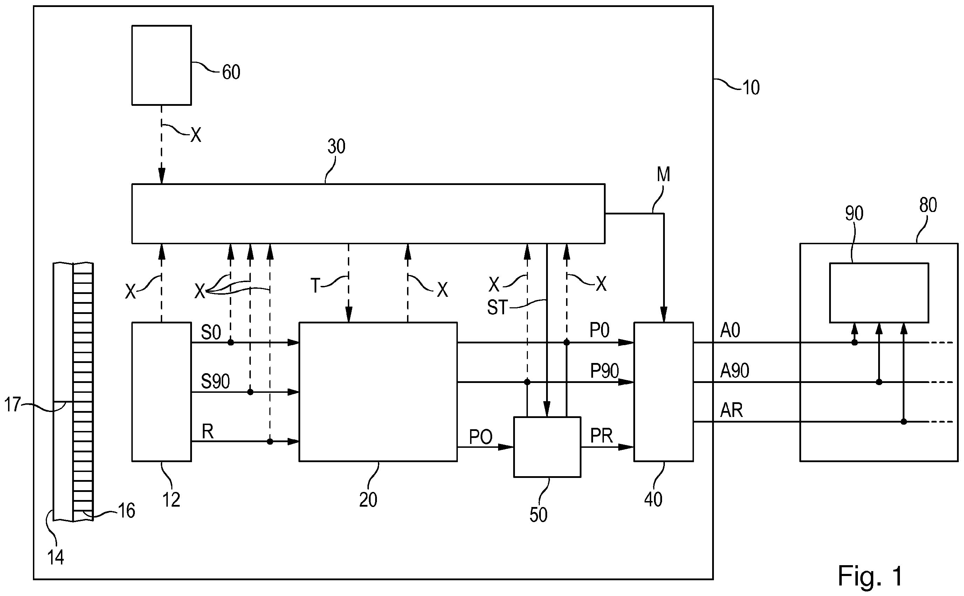

Figur 1 zeigt ein Blockdiagramm einer erfindungsgemäßen Positionsmesseinrichtung 10. Sie umfasst eine Abtasteinheit 12, einen Teilungsträger 14 mit einer Messteilung, eine Signalverarbeitungseinheit 20, eine Überwachungseinheit 30, eine Ausgabeschnittstelle 40, sowie eine Referenzsignal-Ausgabeeinheit 50.

Die Abtasteinheit 12 ist geeignet ausgestaltet, um eine Messteilung auf einem Teilungsträger 14 abzutasten. Teilungsträger 14 und Abtasteinheit 12 sind dabei in bekannter Weise relativ zueinander beweglich angeordnet, beispielsweise indem sie mit beweglichen Teilen einer Werkzeugmaschine verbunden sind, deren Relativposition zueinander bestimmt werden soll.

Neben dem schematisiert dargestellten Ausführungsbeispiel zur Erfassung von linearen Relativpositionen können auch rotatorische Positionsmesseinrichtungen erfindungsgemäß ausgeführt werden. In diesem Fall ist der Teilungsträger nicht als gerader Maßstab, sondern beispielsweise ringförmig oder als kreisrunde Scheibe ausgeführt, bei der die Messteilung radial um ihren Mittelpunkt (der im Betrieb den Drehpunkt einer Welle bildet, deren Winkelposition bzw. Umdrehungszahl gemessen werden soll) angeordnet ist.

Im dargestellten Beispiel besteht die Messteilung aus einer Inkrementalteilungsspur 16 und einer Referenzteilungsspur 17. Aus der Abtastung der Messteilung 16, 17 resultieren Abtastsignale S0, S90, R, die zwei um 90° phasenverschobene Inkrementalsignale S0, S90 aus der Abtastung der Inkrementalteilungsspur 16, sowie ein Referenzsignal R aus der Abtastung der Referenzteilungsspur 17 umfassen. Die Inkrementalsignale S0, S90 sind bei gleichförmiger Bewegung (entsprechend einer konstanten Geschwindigkeit) der Messteilung gegenüber der Abtasteinheit 12 weitgehend sinusförmig. Das Referenzsignal R dient dazu, eine absolute Bezugsposition für die prinzipbedingt relative Positionsmessung der inkrementalen Positionsmesseinrichtung zu liefern. Hierfür wird als Referenzsignal R an einer definierten Position (bzw. im Falle eines Winkelmessgeräts an einer definierten Winkelstellung) ein Impuls generiert.

Die vorliegende Erfindung ist jedoch nicht auf dieses Beispiel eines Abtastprinzips zur Erzeugung von Abtastsignalen, die eine Positionsinformation enthalten, beschränkt. Sie ist vielmehr unabhängig vom physikalischen Abtastprinzip (z.B. optische, magnetische, induktive, kapazitive Abtastung) und der Art und Weise, wie die Positionsinformation in den Abtastsignalen enthalten ist. So sind z.B. auch amplitudenmodulierte oder digital codierte Abtastsignale für die Ausführung der Erfindung geeignet. Entsprechend kann die Messteilung auch ein- oder mehrere absolut codierte Teilungsspuren umfassen.

Die Abtastsignale S0, S90, R sind der Signalverarbeitungseinheit 20 zugeführt, die geeignet ausgestaltet ist, diese zu Positionssignalen P0, P90 einer inkrementalen Schnittstelle der Positionsmesseinrichtung 10 zu verarbeiten. Je nach Abtastprinzip und daraus resultierender Codierung der Positionsinformation in den Abtastsignalen können verschiedenste Verarbeitungsschritte in der Signalverarbeitungseinheit 20 vorgenommen werden:
- Umwandlung von Strom- in Spannungssignale
- Demodulation
- Filterung
- A/D-Wandlung
- Fehlerkorrektur (z.B. Offsetkorrektur, Phasenkorrektur,...)
- Anpassung der Anzahl von Signalperioden pro Längen- oder Winkeleinheit
- D/A-Wandlung

Bei den inkrementalen Positionssignalen P0, P90 kann es sich, wie in den folgenden Beispielen gezeigt, um analoge Signale handeln. Alternativ können sie aber auch digital vorliegen.

Die inkrementalen Positionssignale P0, P90 sind der Ausgabeschnittstelle 40 zugeführt, die sie als inkrementale Ausgangssignale A0, A90 an eine an die Positionsmesseinrichtung 10 angeschlossene Folgeelektronik 80 ausgibt.

Neben den inkrementalen Positionssignalen P0, P90 generiert die Signalverarbeitungseinheit 20 aus den Abtastsignalen S0, S90, R an wenigstens einer Absolutposition ein Referenzimpuls-Steuersignal RO, das sie an die Referenzsignal-Ausgabeeinheit 50 ausgibt. Diese gibt daraufhin im Normalbetrieb über ein Referenzimpuls-Signal PR einen Positions-Referenzimpuls REF an die Ausgabeschnittstelle 40 aus, die das Referenzimpuls-Signal PR als Referenzimpuls-Ausgangssignal AR an die Folgeelektronik 80 ausgibt.

In der Folgeelektronik 80 dient der Positions-Referenzimpuls REF dazu, eine Absolutposition festzustellen und gegebenenfalls die Positionsmessung auf einen definierten Wert zu setzen. Beispielsweise können hierzu Zähler zurückgesetzt werden, die im folgenden Betrieb basierend auf den inkrementalen Positionssignalen Positionsänderungen erfassen.

Die Ausgangssignale A0, A90, AR der Ausgabeschnittstelle 40 werden meist differentiell ausgegeben, das heißt, sie bestehen aus Signalpaaren mit je einem Originalsignal und einem invertierten Signal.

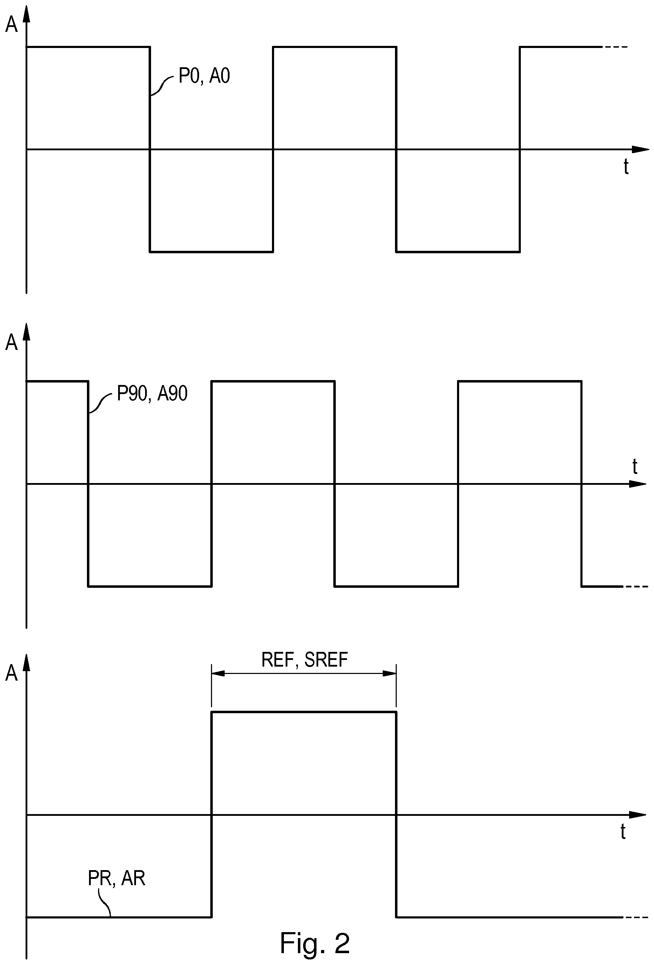

Figur 2 zeigt ein Signaldiagramm der Ausgangssignale einer Positionsmesseinrichtung mit digitalen Ausgangssignalen. Dabei ist zugrunde gelegt, dass die Relativbewegung zwischen Abtasteinheit 12 und Teilungsträger 14 mit konstanter Geschwindigkeit erfolgt.

Die inkrementalen Positionssignale P0, P90, bzw. der daraus resultierenden inkrementalen Ausgangssignale A0, A90 sind periodisch, rechteckförmig und zueinander um 90° phasenverschoben. Der Phasenverschiebung kann die Information über die Bewegungsrichtung entnommen werden, weil sich bei einer Umkehrung der Bewegungsrichtung auch die Zuordnung, welches der Signale vor- bzw. nacheilt, ändert.

Die Auswertung der inkrementalen Ausgangssignale A0, A90 erfolgt in der Folgeelektronik 80 durch Zählung der Signalperioden, häufig auch durch Zählung der Signalflanken, die durch die Phasenverschiebung um 90° in gleichen Zeitabständen (entsprechend gleichen Weg- oder Winkelabständen) auftreten.

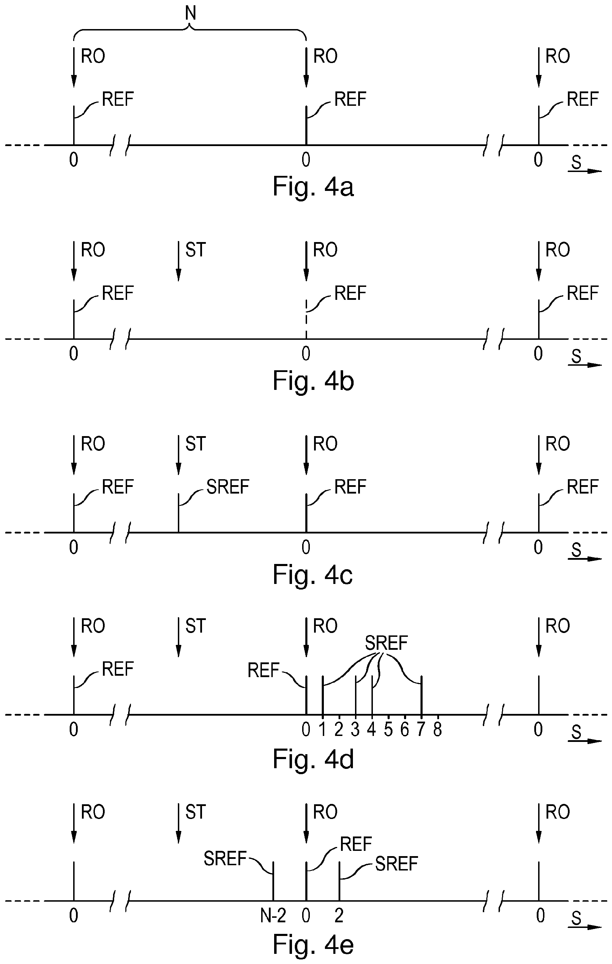

Über das Referenzimpuls-Signal PR, bzw. das Referenzimpuls-Ausgangssignal AR werden Positions-Referenzimpulse REF und, wie unten anhand der Figuren 4a bis 4e gezeigt werden wird, Statusimpulse SREF zur Folgeelektronik 80 übertragen. Wie die inkrementalen Positionssignale P0, P90 sind auch die Positions-Referenzimpulse REF rechteckförmig, treten aber nur bei definierten Absolutpositionen auf. Sie sind einer Signalperiode der inkrementalen Positionssignale P0, P90 zugeordnet. Im dargestellten Beispiel umfassen sie, bezogen auf eine Signalperiode der inkrementalen Positionssignale P0, P90 einen Winkelbereich von 270°. Diese Breite eines Positions-Referenzimpulses REF ist durch den Bereich einer Signalperiode definiert, in dem beide inkrementalen Positionssignale P0, P90 positive Werte, bzw. einen logischen High-Pegel aufweisen. Die Breite des Positions-Referenzimpulses REF ist aber nur insofern relevant, als dass es möglich sein muss, wiederholbar an definierter Stelle der zugeordneten Signalperiode (z.B. an einer definierten Signalflanke) ein Signal zum Setzen der Absolutposition zu generieren.

Handelt es sich bei der Positionsmesseinrichtung 10 um einen Drehgeber oder ein Winkelmessgerät, so tritt der Positions-Referenzimpuls REF einmal pro Umdrehung der zu messenden Welle auf und dient dazu, einen Nullpunkt festzulegen, von dem aus die Winkelmessung (die Zählung der Signalperioden, bzw. Signalflanken) gestartet wird.

Handelt es sich bei der Positionsmesseinrichtung 10 um ein Längenmessgerät, so tritt der Positions-Referenzimpuls REF wenigstens an einer Stelle des Maßstabes auf.

Es sind sowohl Längen- als auch Winkelmessgeräte bekannt, bei denen über die Messdistanz (Maßstabslänge oder Winkelbereich) mehrere Positions-Referenzimpulse auftreten. In diesem Fall können sie beispielsweise durch ihren Abstand zueinander unterschieden werden, so dass zur Ermittlung der Absolutposition zwei Positions-Referenzimpulse ausgewertet werden müssen. Man spricht daher in diesem Zusammenhang auch von abstandscodierten Positions-Referenzimpulsen.

Statusimpulse SREF werden identisch zu den Positions-Referenzimpulsen REF erzeugt und können von diesen nur unterschieden werden, weil sie anderen Signalperioden der inkrementalen Positionssignale P0, P90 und damit anderen Absolutpositionen zugeordnet sind, wie die Positions-Referenzimpulse REF. Statusimpulse dienen nicht zum Setzen einer definierten Absolutposition, sondern zur Übertragung von Statusmeldungen zur Folgeelektronik 80.

Im Folgenden werden Positions-Referenzimpulse REF und Statusimpulse SREF gemeinsam als Referenzimpulse REF, SREF bezeichnet.

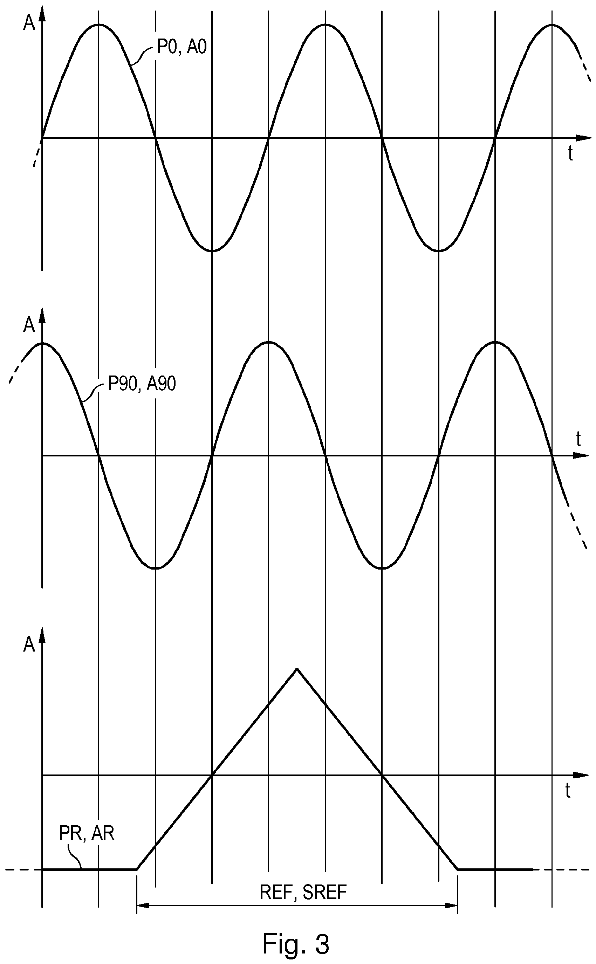

Figur 3 zeigt ein Signaldiagramm der Ausgangssignale einer Positionsmesseinrichtung mit analogen Ausgangssignalen. Auch diesen Signalen ist eine konstante Relativbewegung zwischen Abtasteinheit 12 und Teilungsträger 14 zugrunde gelegt.

Die inkrementalen Positionssignale P0, P90 sind weitgehend sinusförmig, eine Signalperiode entspricht wiederum einer Teilungsperiode. Auch sie weisen eine Phasenverschiebung (vorzugsweise 90°) zueinander auf.

Der Positions-Referenzimpuls REF kann jede beliebige Signalform aufweisen, die geeignet ist, an definierter Stelle der zugeordneten Signalperiode ein Signal zum Setzen einer Absolutposition zu generieren. Im dargestellten Beispiel ist der Positions-Referenzimpuls dreieckförmig und weist dort ein Maximum auf, wo die inkrementalen Positionssignale P0, P90 gleiche Momentanwerte aufweisen.

Auch für Positionsmesseinrichtungen mit analogen Ausgangssignalen gilt, dass Statusimpulse SREF und Referenzimpulse REF in Form und ihre Position bezogen auf die ihnen zugeordneten Signalperioden identisch sind.

Die Überwachungseinheit 30 in Figur 1 ist nun geeignet ausgestaltet, um wenigstens einen Funktionsparameter der Positionsmesseinrichtung 10 zu überwachen. Beispiele für zu überwachende Funktionsparameter sind:
- Amplituden der Abtastsignale S0, S90, R
- Offset der Inkrementalsignale S0, S90
- Phasenlage der Inkrementalsignale S0, S90 zueinander
- Frequenz der Inkrementalsignale S0, S90
- Lage des Referenzsignals R relativ zu den Inkrementalsignalen S0, S90
- Statussignale der Abtasteinheit 12
- Statussignale der Signalverarbeitungseinheit 20
- Amplituden der inkrementalen Positionssignale P0, P90
- Offset der inkrementalen Positionssignale P0, P90
- Phasenlage der inkrementalen Positionssignale P0, P90 zueinander
- Sensorwerte eines internen Sensors 60 (z.B. Temperatur, Vibrationen, Versorgungsspannung)
- Ergebnisse von Selbsttestfunktionen der Positionsmesseinrichtung 10 (Built-In-Self-Test, BIST)

Entsprechend zu überwachende Signale X sind der Überwachungseinheit 30 zugeführt. Die Überwachung erfolgt durch Vergleich mit Erwartungs- oder Grenzwerten, ggf. können Testsignale T an zu überwachende Einheiten (z.B. die Signalverarbeitungseinheit 20) ausgegeben werden, um Selbsttestfunktionen zu initiieren, deren Ergebnis in Form eines zu überwachenden Signals X der Überwachungseinheit 30 zugeführt ist.

Um die Übermittlung wenigstens einer Statusinformation, die aus der Überwachung resultiert, an die Folgeelektronik 80 zu initiieren, gibt die Überwachungseinheit 30 eine entsprechende Statusmeldung ST an die Referenzsignal-Ausgabeeinheit 50 aus. Die Übertragung erfolgt durch Variation der Absolutposition und/oder der Anzahl von Referenzimpulsen REF, SREF über das Referenzimpuls-Signal PR, bzw. das Referenzimpuls-Ausgangssignal AR.

Empfängerseitig, also seitens der Folgeelektronik 80, ist eine Überwachungseinheit 90 vorgesehen, die durch Auswertung der Referenzimpulse REF, SREF eintreffende Statusmeldungen ST erkennt. Hierzu sind ihr das Referenzimpuls-Ausgangssignal AR, sowie ggf. die inkrementalen Ausgangssignale A0, A90, zugeführt. Die empfängerseitige Überwachungseinheit 90 ist geeignet ausgestaltet, um Statusmeldungen ST entsprechend zu verarbeiten und geeignete Maßnahmen zu initiieren, beispielsweise die Ausgabe einer Warnmeldung oder das kontrollierte Abschalten der Maschine. Die empfängerseitige Überwachungseinheit 90 kann, wie in Figur 1 dargestellt, innerhalb der Folgeelektronik 80 angeordnet sein, es kann sich aber auch um eine separate Einheit handeln.

Anhand der Figuren 4a bis 4e soll nun die erfindungsgemäße Ausgabe von Statusmeldungen durch Signaldiagramme verdeutlicht werden. Die horizontale Achse gibt jeweils die zurückgelegte Wegstrecke s (entsprechend der Winkelstellung der überwachten Welle) wieder. In der vertikalen Achse sind Referenzimpulse REF, SREF aufgetragen, wobei zwischen Positions-Referenzimpulsen REF, die zur Feststellung einer Absolutposition dienen, und Statusimpulsen SREF, die ggf. zur Übertragung von Statussignalen ST dienen, unterschieden wird. Darüber hinaus sind in den Signaldiagrammen die Steuersignale RO, ST aufgetragen.

Den Signaldiagrammen wird als Positionsmesseinrichtung 10 ein Drehgeber oder Winkelmessgerät zugrunde gelegt. In jeder Umdrehung der von der Positionsmesseinrichtung 10 überwachten Welle wird im Normalbetrieb an einer definierten Absolutposition ein Positions-Referenzimpuls REF ausgegeben, der bewirkt, dass in der Folgeelektronik 80 ein Zähler, der die Anzahl der Signalperioden N (und ggf. Bruchteile von Signalperioden) der inkrementalen Ausgangssignale zählt, zurückgesetzt wird.

Die folgenden Beispiele lassen sich auch auf Längenmesseinrichtungen und Messgeräte mit abstandscodieren Positions-Referenzimpulsen abbilden.

Figur 4a zeigt nun ein vereinfachtes Signaldiagramm zur Ausgabe von Referenzsignalen entsprechend dem Stand der Technik. Jeweils nach N Signalperioden (entsprechend einer vollen Umdrehung der Welle) gibt die Signalverarbeitungseinheit 20 ein Referenzimpuls-Steuersignal RO an die Referenzimpuls-Ausgabeeinheit 50 aus, die daraufhin über das Referenzimpuls-Signal PR einen Positions-Referenzimpuls REF ausgibt. Dies entspricht auch dem Normalbetrieb einer erfindungsgemäßen Positionsmesseinrichtung 10, wenn keine Statusmeldung ST zur Folgeelektronik 80 übertragen wird.

Figur 4b zeigt ein vereinfachtes Signaldiagramm einer ersten Ausführungsform zur erfindungsgemäßen Ausgabe einer Statusmeldung. In diesem Beispiel erfolgt die Ausgabe der Statusmeldung ST, die zu einem beliebigen Zeitpunkt auftritt, durch Nicht-Ausgabe des darauffolgenden Positions-Referenzimpulses REF. Dieser Variante liegt der Gedanke zugrunde, dass nach einer ersten Initialisierung (dem Setzen einer Absolutposition) nach dem Einschalten der Maschine, in der die Positionsmesseinrichtung 10 betrieben wird, der Positions-Referenzimpuls REF zur Positionsbestimmung nicht mehr zwingend benötigt wird, da diese ab diesem Zeitpunkt auf der Zählung von Signalperioden basieren kann. Der Positions-Referenzimpuls REF dient dann häufig nur der Überprüfung, ob Zählfehler aufgetreten sind. Durch die Nicht-Ausgabe des Positions-Referenzimpulses REF ergibt sich diesbezüglich eine Unsicherheit, die aber häufig toleriert werden kann.

Alternativ kann die empfängerseitige Überwachungseinheit 90 geeignet ausgestaltet sein, das Nicht-Auftreten eines Positions-Referenzimpulses REF an der Referenzposition als Statusmeldung ST auszuwerten und selbst einen Ersatz-Referenzimpuls an die entsprechenden Einheiten in der Folgeelektronik 80 weiterzuleiten. Auf diese Weise kann die Übertragung der Statusmeldung ST unbemerkt von der Folgeelektronik 80 erfolgen.

Figur 4c zeigt ein vereinfachtes Signaldiagramm einer zweiten Ausführungsform zur erfindungsgemäßen Ausgabe einer Statusmeldung. In dieser Variante gibt die Referenzsignal-Ausgabeeinheit 50 unmittelbar nach dem Eintreffen einer Statusmeldung ST einen Statusimpuls SREF aus.

In einer Abwandlung dieser Ausführungsform können mehrere Statusmeldungen ST unterschieden werden, indem Statusimpulse SREF je nach Statusmeldung ST bestimmten Signalperioden der inkrementalen Positionssignale P0, P90 (und damit der inkrementalen Ausgangssignale A0, A90) zugeordnet werden.

Figur 4d zeigt ein vereinfachtes Signaldiagramm einer dritten Ausführungsform zur erfindungsgemäßen Ausgabe einer Statusmeldung. Hier codiert die Referenzsignal-Ausgabeeinheit 50 Statusmeldungen ST als Datenworte, deren Datenbits durch die Ausgabe oder Nicht-Ausgabe von Statusimpulsen SREF gebildet werden. Im dargestellten Beispiel sind hierfür die acht auf einen Positions-Referenzimpuls REF folgenden Signalperioden vorgesehen. Diese Variante ermöglicht beispielsweise die Übertragung von Messdaten des Sensors 60 als Statusmeldungen ST zur Folgeelektronik 80.

Figur 4e zeigt schließlich ein vereinfachtes Signaldiagramm einer vierten Ausführungsform zur erfindungsgemäßen Ausgabe einer Statusmeldung. In diesem Beispiel erfolgt die Ausgabe einer Statusmeldung durch je einen Statusimpuls SREF an definierten Positionen vor und nach einem Positions-Referenzimpuls REF. Durch gleiche Abstände zum Positions-Referenzimpuls REF (im Beispiel zwei Signalperioden vor und nach dem Positions-Referenzimpuls REF) kann die Referenzposition einfach verifiziert werden.

Die empfängerseitige Überwachungseinheit 90 kann jeweils geeignet ausgestaltet sein, lediglich reguläre Positions-Referenzimpulse REF an die entsprechenden Einheiten in der Folgeelektronik 80 weiterzuleiten, so dass Statusimpulse SREF den Betrieb der Folgeelektronik 80 nicht beeinträchtigen.

Um zu vermeiden, dass ein Statusimpuls SREF fälschlicherweise zum Setzen einer Absolutposition führt, weil er als Positions-Referenzimpuls REF interpretiert wird, ist es vorteilhaft, die Übertragung von Statusmeldungen ST erst freizuschalten, wenn das Setzen der Absolutposition durch einen regulären Positions-Referenzimpuls REF erfolgt ist.

Die vorliegende Erfindung ist selbstverständlich nicht auf die beschriebenen Ausführungsbeispiele begrenzt, sondern kann von einem Fachmann im Rahmen der Patentansprüche alternativ ausgeführt werden.

In Bezug auf die Signaldiagramme in den Figuren sei darauf hingewiesen, dass die Amplituden der Positionssignale P0, P90, PR und der korrespondierenden Ausgangssignale A0, A90, AR lediglich der Einfachheit halber identisch dargestellt wurden, sich in der Praxis aber durchaus unterscheiden können. Wie oben bereits erwähnt, kann es sich insbesondere bei den Ausgangssignalen A0, A90, AR um differentielle Ausgangssignalpaare handeln.

Die elektronische Schaltung zur Realisierung der Funktionen der Positionsmesseinrichtung 10, insbesondere der Signalverarbeitungseinheit 20, der Überwachungseinheit 30 und der Referenzsignal-Ausgabeeinheit 50, kann mit Vorteil, zumindest teilweise, in einem ASIC integriert sein. Ebenso können Funktionsblöcke als Programm in einem Mikrocontroller, DSP, o.ä. realisiert werden.

## Patentansprüche

1. Positionsmesseinrichtung umfassend
• einen Teilungsträger (14), auf dem eine Messteilung (16, 17) angeordnet ist,
• eine Abtasteinheit (12) zur Erzeugung von positionsabhängigen Abtastsignalen (S0, S90, R) durch Abtastung der Messteilung (16, 17),
• eine Signalverarbeitungseinheit (20) zur Verarbeitung der Abtastsignale (S0, S90, R) zu inkrementalen Positionssignalen (P0, P90),
• eine Referenzsignal-Ausgabeeinheit (50) zur Ausgabe von Referenzimpulsen (REF, SREF), die Signalperioden der inkrementalen Positionssignale (P0, P90) zugeordnet sind, über ein Referenzimpuls-Signal (PR) und
• eine Ausgabeschnittstelle (40) zur Ausgabe der inkrementalen Positionssignale (P0, P90) und des Referenzimpuls-Signals (PR) an eine Folgeelektronik (80),
**dadurch gekennzeichnet, dass**
• die Positionsmesseinrichtung weiter eine Überwachungseinheit (30) umfasst, der wenigstens ein zu überwachendes Signal (X) zugeführt ist und von der, basierend auf der Überwachung des zu überwachenden Signals (X), wenigstens eine Statusmeldung (ST) an die Referenzsignal-Ausgabeeinheit (50) ausgebbar ist und
• von der Referenzsignal-Ausgabeeinheit (50) die wenigstens eine Statusmeldung (ST) durch Variation der Absolutposition von über das Referenzimpuls-Signal (PR) ausgegebenen Referenzimpulsen (REF, SREF) und/oder der Anzahl von über das Referenzimpuls-Signal (PR) ausgegebenen Referenzimpulsen (REF, SREF) ausgebbar ist.

2. Positionsmesseinrichtung nach Anspruch 1, wobei die Referenzimpulse (REF, SREF) wenigstens einen Positions-Referenzimpuls (REF) umfassen, der im Normalbetrieb dazu dient, in der Folgeelektronik (80) eine Absolutposition festzustellen und die wenigstens eine Statusmeldung (ST) durch Nicht-Ausgabe eines Positions-Referenzimpulses (REF) ausgebbar ist

3. Positionsmesseinrichtung nach einem der vorhergehenden Ansprüche, wobei die Referenzimpulse (REF, SREF) wenigstens einen Statusimpuls (SREF) umfassen und die wenigstens eine Statusmeldung (ST) durch Ausgabe des wenigstens einen Statusimpulses (SREF) an wenigstens einer definierten Absolutposition erfolgt.

4. Positionsmesseinrichtung nach Anspruch 3, wobei unterschiedliche Statusmeldungen (ST) bestimmten Signalperioden der inkrementalen Positionssignale (P0, P90) zugeordnet sind.

5. Positionsmesseinrichtung nach Anspruch 3, wobei unterschiedliche Statusmeldungen (ST) als Datenworte codiert übertragbar sind, die durch Ausgabe oder Nichtausgabe von Statusimpulsen (SREF) gebildet sind.

6. Positionsmesseinrichtung nach einem der vorhergehenden Ansprüche, wobei von der Überwachungseinheit (30) ein Testsignal (T) an eine zu überwachende Einheit (20) ausgebbar ist.

7. Verfahren zum Ausgeben einer Statusmeldung mit einer Positionsmesseinrichtung umfassend
• einen Teilungsträger (14), auf dem eine Messteilung (16, 17) angeordnet ist,
• eine Abtasteinheit (12) zur Erzeugung von positionsabhängigen Abtastsignalen (S0, S90, R) durch Abtastung der Messteilung (16, 17),
• eine Signalverarbeitungseinheit (20) zur Verarbeitung der Abtastsignale (S0, S90, R) zu inkrementalen Positionssignalen (P0, P90),
• eine Referenzsignal-Ausgabeeinheit (50) zur Ausgabe von Referenzimpulsen (REF, SREF), die Signalperioden der inkrementalen Positionssignale (P0, P90) zugeordnet sind, über ein Referenzimpuls-Signal (PR) und
• eine Ausgabeschnittstelle (40) zur Ausgabe der inkrementalen Positionssignale (P0, P90) und des Referenzimpuls-Signals (PR) an eine Folgeelektronik (80),
**dadurch gekennzeichnet, dass**
• die Positionsmesseinrichtung weiter eine Überwachungseinheit (30) umfasst, der wenigstens ein zu überwachendes Signal (X) zugeführt ist und von der, basierend auf der Überwachung des zu überwachenden Signals (X), wenigstens eine Statusmeldung (ST) an die Referenzsignal-Ausgabeeinheit (50) ausgegeben wird und
• von der Referenzsignal-Ausgabeeinheit (50) die wenigstens eine Statusmeldung (ST) durch Variation der Absolutposition von über das Referenzimpuls-Signal (PR) ausgegebenen Referenzimpulsen (REF, SREF) und/oder der Anzahl von über das Referenzimpuls-Signal (PR) ausgegebenen Referenzimpulsen (REF, SREF) ausgegeben wird.

8. Verfahren nach Anspruch 7, wobei die Referenzimpulse (REF, SREF) wenigstens einen Positions-Referenzimpuls (REF) umfassen, der im Normalbetrieb dazu dient, in der Folgeelektronik (80) eine Absolutposition festzustellen und die wenigstens eine Statusmeldung (ST) durch Nicht-Ausgabe eines Positions-Referenzimpulses (REF) ausgegeben wird.

9. Verfahren nach einem der Ansprüche 7 oder 8, wobei die Referenzimpulse (REF, SREF) wenigstens einen Statusimpuls (SREF) umfassen und die wenigstens eine Statusmeldung (ST) durch Ausgabe des wenigstens einen Statusimpulses (SREF) an wenigstens einer definierten Absolutposition erfolgt.

10. Verfahren nach Anspruch 9, wobei unterschiedliche Statusmeldungen (ST) bestimmten Signalperioden der inkrementalen Positionssignale (P0, P90) zugeordnet sind.

11. Verfahren nach Anspruch 9, wobei unterschiedliche Statusmeldungen (ST) als Datenworte codiert übertragen werden, die durch Ausgabe oder Nichtausgabe von Statusimpulsen (SREF) gebildet werden.

12. Verfahren nach einem der Ansprüche 7 bis 11, wobei von der Überwachungseinheit (30) ein Testsignal (T) an eine zu überwachende Einheit ausgeben wird.

13. Folgeelektronik, an die wenigstens eine Positionsmesseinrichtung 10 nach einem der Ansprüche 1 bis 6 anschließbar ist, mit einer empfängerseitigen Überwachungseinheit (90), mit der Referenzimpulse (REF, SREF) auswertbar und daraus Statusmeldungen (ST) erkennbar sind.

## Claims

1. Position measuring device comprising
• a graduation carrier (14), on which a measurement graduation (16, 17) is arranged,
• a scanning unit (12) for generating position-dependent scanning signals (S0, S90, R) by scanning the measurement graduation (16, 17),
• a signal processing unit (20) for processing the scanning signals (S0, S90, R) to form incremental position signals (P0, P90),
• a reference signal output unit (50) for outputting reference pulses (REF, SREF), which are assigned to signal periods of the incremental position signals (P0, P90), by way of a reference pulse signal (PR), and
• an output interface (40) for outputting the incremental position signals (P0, P90) and the reference pulse signal (PR) to downstream electronics (80),
**characterized in that**
• the position measuring device further comprises a monitoring unit (30), to which at least one signal (X) to be monitored is fed and by which, on the basis of the monitoring of the signal (X) to be monitored, at least one status message (ST) is able to be output to the reference signal output unit (50), and
• the at least one status message (ST) is able to be output by the reference signal output unit (50) by means of variation of the absolute position of reference pulses (REF, SREF) output by way of the reference pulse signal (PR) and/or the number of reference pulses (REF, SREF) output by way of the reference pulse signal (PR) .

2. Position measuring device according to Claim 1, wherein the reference pulses (REF, SREF) comprise at least one position reference pulse (REF), which during normal operation serves to ascertain an absolute position in the downstream electronics (80), and the at least one status message (ST) is able to be output by means of non-outputting of a position reference pulse (REF).

3. Position measuring device according to either of the preceding claims, wherein the reference pulses (REF, SREF) comprise at least one status pulse (SREF) and the at least one status message (ST) is effected by means of outputting of the at least one status pulse (SREF) at at least one defined absolute position.

4. Position measuring device according to Claim 3, wherein different status messages (ST) are assigned to specific signal periods of the incremental position signals (P0, P90).

5. Position measuring device according to Claim 3, wherein different status messages (ST) are able to be transmitted in a manner encoded as data words, which are formed by means of outputting or non-outputting of status pulses (SREF).

6. Position measuring device according to any of the preceding claims, wherein a test signal (T) is able to be output by the monitoring unit (30) to a unit (20) to be monitored.

7. Method for outputting a status message with a position measuring device comprising
• a graduation carrier (14), on which a measurement graduation (16, 17) is arranged,
• a scanning unit (12) for generating position-dependent scanning signals (S0, S90, R) by scanning the measurement graduation (16, 17),
• a signal processing unit (20) for processing the scanning signals (S0, S90, R) to form incremental position signals (P0, P90),
• a reference signal output unit (50) for outputting reference pulses (REF, SREF), which are assigned to signal periods of the incremental position signals (P0, P90) by way of a reference pulse signal (PR), and
• an output interface (40) for outputting the incremental position signals (P0, P90) and the reference pulse signal (PR) to downstream electronics (80),
**characterized in that**
• the position measuring device further comprises a monitoring unit (30), to which at least one signal (X) to be monitored is fed and by which, on the basis of the monitoring of the signal (X) to be monitored, at least one status message (ST) is output to the reference signal output unit (50), and
• the at least one status message (ST) is output by the reference signal output unit (50) by means of variation of the absolute position of reference pulses (REF, SREF) output by way of the reference pulse signal (PR) and/or the number of reference pulses (REF, SREF) output by way of the reference pulse signal (PR).

8. Method according to Claim 7, wherein the reference pulses (REF, SREF) comprise at least one position reference pulse (REF), which during normal operation serves to ascertain an absolute position in the downstream electronics (80), and the at least one status message (ST) is output by means of non-outputting of a position reference pulse (REF) .

9. Method according to either of Claims 7 and 8, wherein the reference pulses (REF, SREF) comprise at least one status pulse (SREF) and the at least one status message (ST) is effected by means of outputting of the at least one status pulse (SREF) at at least one defined absolute position.

10. Method according to Claim 9, wherein different status messages (ST) are assigned to specific signal periods of the incremental position signals (P0, P90).

11. Method according to Claim 9, wherein different status messages (ST) are transmitted in a manner encoded as data words, which are formed by means of outputting or non-outputting of status pulses (SREF).

12. Method according to any of Claims 7 to 11, wherein a test signal (T) is output by the monitoring unit (30) to a unit to be monitored.

13. Downstream electronics to which at least one position measuring device 10 according to any of Claims 1 to 6 is able to be connected, comprising a receiver-side monitoring unit (90), by means of which reference pulses (REF, SREF) are able to be evaluated and status messages (ST) are able to be identified therefrom.

## Revendications

1. Dispositif de mesure de position comprenant
• un support de graduation (14) sur lequel est disposée une graduation de mesure (16, 17),
• une unité de balayage (12) pour générer des signaux de balayage en fonction de la position (S0, S90, R) par balayage de la graduation de mesure (16, 17),
• une unité de traitement des signaux (20) pour transformer les signaux de balayage (S0, S90, R) en signaux de position incrémentiels (P0, P90),
• une unité de sortie de signal de référence (50) pour fournir en sortie des impulsions de référence (REF, SREF) associées à des périodes de signal des signaux de position incrémentiels (P0, P90) par le biais d'un signal d'impulsion de référence (PR) et
• une interface de sortie (40) pour fournir en sortie des signaux de position incrémentiels (P0, P90) et le signal d'impulsion de référence (PR) à une électronique aval (80),
**caractérisé en ce que**
• le dispositif de mesure de position comprend en outre une unité de surveillance (30) à laquelle est délivré au moins un signal (X) à surveiller et à partir de laquelle, sur la base de la surveillance du signal (X) à surveiller, au moins un message d'état (ST) peut être fourni à l'unité de sortie de signal de référence (50) et
• ledit au moins un message d'état (ST) peut être fourni par l'unité de sortie de signal de référence (50) en faisant varier la position absolue d'impulsions de référence (REF, SREF) fournies par le biais du signal d'impulsion de référence (PR) et/ou le nombre d'impulsions de référence (REF, SREF) fournies par le biais du signal d'impulsion de référence (PR).

2. Dispositif de mesure de position selon la revendication 1, dans lequel les impulsions de référence (REF, SREF) comprennent au moins une impulsion de référence de position (REF) qui, en fonctionnement normal, sert à déterminer une position absolue dans l'électronique aval (80) et ledit au moins un message d'état (ST) peut être fourni par la non-fourniture d'une impulsion de référence de position (REF).

3. Dispositif de mesure de position selon l'une des revendications précédentes, dans lequel les impulsions de référence (REF, SREF) comprennent au moins une impulsion d'état (SREF) et ledit au moins un message d'état (ST) est fourni par fourniture de ladite au moins une impulsion d'état (SREF) à au moins une position absolue définie.

4. Dispositif de mesure de position selon la revendication 3, dans lequel différents messages d'état (ST) sont associés à des périodes de signal déterminées des signaux de position incrémentiels (P0, P90).

5. Dispositif de mesure de position selon la revendication 3, dans lequel différents messages d'état (ST) peuvent être transmis de manière codée sous forme de mots de données qui sont formés par la fourniture ou la non-fourniture d'impulsions d'état (SREF).

6. Dispositif de mesure de position selon l'une des revendications précédentes, dans lequel un signal de test (T) peut être fourni par l'unité de surveillance (30) à une unité à surveiller (20).

7. Procédé de fourniture d'un message d'état au moyen d'un dispositif de mesure de position comprenant
• un support de graduation (14) sur lequel est disposée une graduation de mesure (16, 17),
• une unité de balayage (12) pour générer des signaux de balayage en fonction de la position (S0, S90, R) par balayage de la graduation de mesure (16, 17),
• une unité de traitement des signaux (20) pour transformer les signaux de balayage (S0, S90, R) en signaux de position incrémentiels (P0, P90),
• une unité de sortie de signal de référence (50) pour fournir en sortie des impulsions de référence (REF, SREF) associées à des périodes de signal desdits signaux de position incrémentiels (P0, P90) par le biais d'un signal d'impulsion de référence (PR) et
• une interface de sortie (40) pour fournir en sortie les signaux de position incrémentiels (P0, P90) et le signal d'impulsion de référence (PR) à une électronique aval (80),
**caractérisé en ce que**
• le dispositif de mesure de position comprend en outre une unité de surveillance (30) à laquelle est délivré au moins un signal (X) à surveiller et à partir de laquelle, sur la base de la surveillance du signal (X) à surveiller, au moins un message d'état (ST) est fourni à l'unité de sortie de signal de référence (50) et
• ledit au moins un message d'état (ST) est fourni par l'unité de sortie de signal de référence (50) en faisant varier la position absolue d'impulsions de référence (REF, SREF) fournies par le biais du signal d'impulsion de référence (PR) et/ou le nombre d'impulsions de référence (REF, SREF) fournies par le biais du signal d'impulsion de référence (PR).

8. Procédé selon la revendication 7, dans lequel les impulsions de référence (REF, SREF) comprennent au moins une impulsion de référence de position (REF) qui, en fonctionnement normal, sert à déterminer une position absolue dans l'électronique aval (80) et ledit au moins un message d'état (ST) est fourni par la non-fourniture d'une impulsion de référence de position (REF).

9. Procédé selon l'une des revendications 7 ou 8, dans lequel les impulsions de référence (REF, SREF) comprennent au moins une impulsion d'état (SREF) et ledit au moins un message d'état (ST) est fourni par fourniture de ladite au moins une impulsion d'état (SREF) à au moins une position absolue définie.

10. Procédé selon la revendication 9, dans lequel différents messages d'état (ST) sont associés à des périodes de signal déterminées des signaux de position incrémentiels (P0, P90).

11. Procédé selon la revendication 9, dans lequel différents messages d'état (ST) sont transmis de manière codée sous forme de mots de données qui sont formés par la fourniture ou la non-fourniture d'impulsions d'état (SREF) .

12. Procédé selon l'une des revendications 7 à 11, dans lequel un signal de test (T) est fourni par l'unité de surveillance (30) à une unité à surveiller.

13. Électronique aval à laquelle peut être raccordé au moins un dispositif de mesure de position 10 selon l'une des revendications 1 à 6, comportant une unité de surveillance (90) côté récepteur, au moyen de laquelle des impulsions de référence (REF, SREF) peuvent être évaluées, celles-ci permettant de détecter des messages d'état (ST).
